# EUROPÄISCHE PATENTSCHRIFT

(11) **EP 3 885 154 B1**
(45) Veröffentlichungstag und Bekanntmachung des Hinweises auf die Patenterteilung: **07.06.2023**
(21) Anmeldenummer: 20164990.2
(22) Anmeldetag: 23.03.2020
(51) Int. Cl.: B43K 19/02, C09D 13/00, C04B 33/04, C04B 35/52, C04B 35/632, B43K 19/18, C04B 35/636

(54) **GRAPHITMINE ODER GRAPHITKREIDE ODER GRAPHITBLOCK, STIFT MIT GRAPHITMINE UND VERFAHREN ZUR HERSTELLUNG EINER GRAPHITMINE ODER GRAPHITKREIDE ODER EINES GRAPHITBLOCKS**
GRAPHITE LEAD OR GRAPHITE CHALK OR GRAPHITE BLOCK, PENCIL WITH GRAPHITE LEAD AND METHOD FOR PRODUCING GRAPHITE LEAD OR GRAPHITE CHALK OR GRAPHITE BLOCK
MINE DE GRAPHITE OU CRAIE DE GRAPHITE OU BLOC DE GRAPHITE, CRAYON À MINE DE GRAPHITE ET PROCÉDÉ DE FABRICATION D'UNE MINE DE GRAPHITE OU DE CRAIE DE GRAPHITE OU DE BLOC DE GRAPHITE

(43) Veröffentlichungstag der Anmeldung: 29.09.2021
(73) Patentinhaber: Faber- Castell AG, 90546 Stein (DE)
(72) Erfinder: Appel, Reiner, 90522 Oberasbach (DE); Kinzel, Joachim, 90547 Stein (DE); Bachmann, Silke, 90461 Nürnberg (DE); Lugert, Gerhard, 90431 Nürnberg (DE)
(74) Vertreter: Schlögl, Markus

(56) Entgegenhaltungen:
- DE-A1- 4 214 396
- JP-A- 2001 064 561
- JP-A- 2005 060 666
- JP-A- 2007 246 605

## Beschreibung

Die Erfindung betrifft eine Graphitmine oder Graphitkreide oder einen Graphitblock, einen Stift mit Graphitmine und ein Verfahren zur Herstellung einer Graphitmine oder Graphitkreide oder eines Graphitblocks.

Üblicherweise werden klassische Graphitminen oder -kreiden aus einer Ton- und Graphitmischung hergestellt. Hierbei werden die beiden sehr fein pulverisierten Materialien zusammen mit Wasser in Knetern oder alternativ auch Schnellmischern homogen vermischt. Aus dem erhaltenen wasserhaltigen Granulat werden über Strangpressen Minen- oder Kreidenstränge extrudiert und auf die gewünschte Länge geschnitten. Anschließend werden die abgelängten Minen- oder Kreidenstränge bei Temperaturen von bis zu 140 °C getrocknet. Die so erhaltenen Rohminen oder Rohkreiden werden dann bei Temperaturen von 800 bis 1100 °C einem keramischen Brand unterzogen, um eine ausreichende Festigkeit zu erhalten. Nach dem Abkühlen der gebrannten Minen oder Kreiden werden diese bei erhöhten Temperaturen von etwa 80 bis 90 °C in eine Öl-/Wachsschmelze eingetaucht.

Nachteilig bei derartigen klassischen Graphitminen ist, dass die Herstellung sehr weicher Härtegrade, wie 12B oder 14B, nur schwer möglich ist, da die mechanische Festigkeit dieser Minen bei einem Durchmesser von typischerweise 2 bis 3 mm zu gering ist. Der Härtegrad von Graphitminen wird entscheidend durch das Mischungsverhältnis von Graphit und Ton bestimmt, wobei die Graphitmine mit steigendem Graphitanteil weicher wird. Ein hilfsweiser möglicher Zusatz von Bindemitteln auf Cellulosebasis zu der wässrigen Ton- und Graphitmischung ist für sehr weiche Härtegrade nicht möglich, da bei merklichen Mengen cellulosehaltiger Bindemittel innerhalb des keramischen Brandes ein Platzen oder Reißen der Graphitminen durch den Sinterprozess zu beobachten ist. Außerdem zeigen derartige Graphitminen stets einen mehr oder weniger ausgeprägten Glanz der Aufstriche beim Einsatz von handelsüblichen Graphittypen.

JP 2005 060666 A offenbart eine Mine enthaltend Graphit, Carboxymethylcellulose und Ton, wobei die fertige, gebackene Mine mit einem Paraffin imprägniert wird.

JP 2007 246605 A offenbart Graphitminen mit einem Grundkörper enthaltend Graphit, Ethylcellulose, Natriumstearat und Talk, wobei die fertige Mine mit einer Paraffin enthaltenden Mischung imprägniert wird.

JP 2001 064561 A offenbart eine Mine enthaltend Graphit und Ethylcellulose. Nach dem Backen wird die Mine mit einer öligen Substanz, beispielsweise Paraffinöl, imprägniert.

DE 42 14 396 A1 offenbart eine Farbmine, die Carboxymethylcellulose, Talkum sowie Graphifluorid enthält. Zur Imprägnierung der Farbmine werden beliebige Öle, Fette und/oder Wachse verwendet.

Aufgabe der Erfindung ist es daher, eine Graphitmine oder Graphitkreide oder einen Graphitblock, insbesondere für künstlerische Anwendungen auf Papier und Karton oder Holz, vorzuschlagen, welche oder welcher insbesondere einen weichen oder sehr weichen Härtegrad bei ausreichend mechanischer Festigkeit aufweist und mit welcher oder welchem sich matte Aufstriche mit einer mattschwarzen Abstufung erzeugen lassen.

Die erstgenannte Aufgabe wird gelöst durch eine Graphitmine oder Graphitkreide oder einen Graphitblock zum Zeichnen und Malen mit den Merkmalen gemäß Anspruch 1.

Die Graphitmine oder Graphitkreide oder der Graphitblock zum Zeichnen und Malen umfasst einen Grundkörper aus einer Grundmasse, wobei die Grundmasse zur Herstellung des Grundkörpers wenigstens ein Bindemittel auf Cellulosebasis, Kaolin als Füllstoff und Graphit enthält, wobei der Grundkörper mit einer wasserfesten Präparationsmischung enthaltend sogenannte weiße Paraffinwachse, nämlich wenigstens eine Mischung aus iso- und n-Paraffinen imprägniert ist.

Die Idee der Erfindung besteht somit darin, eine sogenannte Präpariermine, Präparierkreide oder einen Präparierblock ("Post-waxed leads") herzustellen, bei welchem ein Bindemittel auf Cellulosebasis, beispielsweise Cellulose oder Celllulosederivate, insbesondere Carboxymethylcellulose, eingesetzt wird. Als Pigment wird Graphit zugesetzt. Als Füllstoff können anorganische Füllstoffe eingesetzt werden, beispielsweise Calciumcarbonat, Bimsmehl und Ton. Erfindungsgemäß wird als Füllstoff Kaolin eingesetzt, dessen Verwendung sich als besonders geeignet herausgestellt hat.

Ein weiterer wesentlicher Aspekt zur Erreichung matter Aufstriche wird gemäß der Erfindung durch die Zusammensetzung der wasserfesten Präparationsmischung (oder: Öl-/Wachsschmelze) erzielt, in welche der Grundkörper, auch als Rohmine, Rohkreide oder Rohblock bezeichnet, nach dessen Herstellung getaucht wird. Hierbei haben sich weiße Paraffinwachse mit einem Gehalt an n- und iso-Paraffinen als besonders geeignet erwiesen. Die verwendeten Paraffinwachse haben einen Erstarrungspunkt gemäß ISO 2207 zwischen 52 bis 56 °C und einen Tropfpunkt gemäß ISO 2176 zwischen 52 bis 56 °C. Eine Penetration bei 25 °C (DIN51579) liegt bei 15 bis 19, wobei die Penetrationsnadel 0,1 mm tief eindringt. Die Viskosität bei 110 °C liegt zwischen 2 bis 4 mPas (DIN53019). Außerdem weisen die Paraffine einen Ölgehalt von max. 0,5 Gew.-% auf. Denkbar ist ferner der Einsatz einer wasserlöslichen Präparationsmischung, die wasserlösliche Emulgatoren enthält.

Erfindungsgemäße graphithaltige Feststoffminen oder Kreiden oder - rechteckige oder quadratische - Blöcke zum Zeichnen und Malen, insbesondere für künstlerische Anwendungen auf Papier oder Karton oder Holz, führen - im Gegensatz zu bisher bekannten, gebrannten Graphitminen - nach der Applikation bzw. dem Zeichnen auf den Maluntergründen zu matten Oberflächen der aufgebrachten Striche oder aufgebrachten Flächen. Außerdem lassen sich neben den Standardhärtegraden wie HB, B, 2B, 6B bis 8B auch extrem weiche und schwarze applizierbare Minen oder Kreiden mit Härtegraden bis 14B erreichen, da durch Imprägnieren des Grundkörpers in der Präparationsmischung gemäß der erfindungsgemäßen Zusammensetzung die Graphitmine, Graphitkreide oder der Graphitblock weicher werden.

Der Einfachheit halber wird nachfolgend überwiegend auf Graphitminen Bezug genommen, die gemachten Ausführungen gelten jedoch ebenso hinsichtlich Graphitkreiden oder Graphitblöcke.

Durch das Bindemittel lassen sich unter anderem eine bessere Bearbeitbarkeit der Grundmasse sowie eine bessere Ausformung des Grundkörpers erreichen. Ferner lässt sich durch das Bindemittel insbesondere die erforderliche mechanische Festigkeit der Rohminen, Rohkreiden oder des Rohblockes bzw. Grundkörpers gewährleisten. Hierbei hat sich ein Anteil an Bindemittel zwischen 0,5 und 6 Gew.-% in der Grundmasse als vorteilhaft herausgestellt.

Der Füllstoff ist vorzugsweise mit einem Anteil zwischen 40 und 90 Gew.-% in der Grundmasse bzw. dem Grundkörper enthalten.

Zur Erzeugung ausreichend schwarzer Aufstriche hat sich für Graphit ein Anteil zwischen 4 und 30 Gew.-% in der Grundmasse bzw. dem Grundköper als geeignet erwiesen.

Bei der herkömmlichen Graphitminenherstellung werden Graphittypen mit einer Korngrößenverteilung von x₁₀ = 1,8 µm, x₅₀ = 6,9 µm sowie x₉₀ von 16,9 µm und mit einem Kohlenstoffgehalt zwischen 95 bis 98 Gew.-% eingesetzt. Bei Versuchen mit diversen Graphittypen hat sich jedoch gezeigt, dass Graphit mit einer Korngrößenverteilung x₁₀ = 0,9 µm, x₅₀ = 3,3 µm, x₉₀ = 14,6 µm und einem Kohlenstoffgehalt ("Glühverlust") von 88 bis 92 Gew.-% besonders gut geeignet ist. Insbesondere bei dem Wert x₅₀ weist die bevorzugte Graphittype mit 3,3 µm wesentlich geringere Partikelgrößen auf als die Standardtype, welche einen Wert von x₅₀ von 6,9 µm aufzeigt. Als Methode für die Partikelgrößenanalyse wurden das Gerät HELOS sowie die Korngrößen-Software WINDOX5 eingesetzt.

Zum Einstellen eines weichen oder sehr weichen Härtegrades, wie z.B. 4B, 5B, 6B, 10B, 12B oder 14B, ist in der Grundmasse gemäß einer vorteilhaften Ausführungsform zusätzlich Ruß enthalten.

Eine Begrenzung des Anteils an Ruß auf maximal 35 Gew.-% hat sich hierbei als vorteilhaft erwiesen.

Je nach Bedarf können die Graphitmine oder Graphitkreide oder der Graphitblock weitere, übliche Additive, insbesondere ein Gleitmittel, beispielsweise Calciumstearat, und/oder ein Tensid und/oder Emulgatoren enthalten, die der Grundmasse bei der Herstellung der Graphitmine oder Graphitkreide oder des Graphitblocks zugefügt werden, um die Verarbeitbarkeit der Ausgangsstoffe zu erleichtern.

Der Anteil an Additiven beträgt gemäß einer vorteilhaften Ausführungsform maximal 5 Gew.-%.

Zusammenfassend lässt sich als Rezeptur für die Grundmasse zur Herstellung des Grundkörpers für matte Graphitminen oder Graphitkreiden oder Graphitblöcke somit folgende Zusammensetzung angeben:

| | |
|---|---|
| Bindemittel auf Cellulosebasis: | 0,5 - 6 Gew.-% |
| Füllstoff Kaolin: | 40 - 90 Gew.-% |
| Graphit: | 4 - 30 Gew.-% |
| Ruß: | 0 - 35 Gew.-% |
| Additive: | 0 - 5 Gew.-% |

Für die Zusammensetzung der wasserfesten Präparationsmischung ist insbesondere der Einsatz einer Mischung von iso- und n-Paraffinen mit einem Anteil zwischen 10 bis 50 Gew.-% empfehlenswert.

Außerdem ist besonders geeignet der Zusatz einer Fettsäure zu der wasserfesten Präparationsmischung, insbesondere Stearin, also ein Gemisch aus Stearinsäure und Palmitinsäure, oder Stearinsäure, um die Aufstricheigenschaften der Graphitmine zu verbessern.

Vorteilhafte Konzentrationen der Fettsäure liegen zwischen 25 bis 70 Gew. %.

Ferner können der wasserfesten Präparationsmischung zur weiteren Verbesserung der Aufstricheigenschaften Triglyceride und/oder weitere wachsartige Komponenten, insbesondere Fettsäurederivate oder Polyolefinwachse, insbesondere funktionalisiertes Metallocen-Polyolefinwachs, oder Ethylenvinylacetatwachs, besonders bevorzugt in Konzentrationen bis max. 40 Gew.-% zugesetzt werden.

Zusammenfassend lässt sich als Rezeptur für eine wasserfeste Präparationsmischung folgende bevorzugte Zusammensetzung angegeben:

| | |
|---|---|
| Stearin: | 25 bis 70 Gew.-% |
| iso- / n-Paraffinmischung: | 10 bis 50 Gew.-% |
| Triglyceride: | 0 bis 40 Gew.-% |

Die zweitgenannte Aufgabe wird gelöst mit einem Stift mit den Merkmalen gemäß Anspruch 13, welcher eine Graphitmine mit den vorstehend beschriebenen Merkmalen umfasst. Der Stift weist dabei insbesondere eine Ummantelung aus Holz oder aus einem Holzersatzwerkstoff ("Wood Plastic Compound") auf, welcher die Graphitmine umhüllt. Alternativ ist der Stift ein mechanischer Stift, beispielsweise ein Feinminenstift, der mit Graphitminen ausgestattet ist.

Die drittgenannte Aufgabe wird gemäß Anspruch 14 gelöst durch ein Verfahren zur Herstellung einer Graphitmine oder Graphitkreide oder eines Graphitblocks, insbesondere einer Graphitmine oder Graphitkreide oder eines Graphitblocks gemäß der vorstehend beschriebenen Zusammensetzung, umfassend die nachfolgenden Schritte:
Bei der Herstellung der Graphitmine, Graphitkreide oder des Graphitblocks wird zunächst ein Grundkörper aus einer Grundmasse wenigstens hergestellt, wobei die Grundmasse wenigstens ein Bindemittel auf Cellulosebasis, Kaolin als Füllstoff und Graphit enthält (Schritt a)).

Die Herstellung des Grundkörpers erfolgt insbesondere wie nachfolgend beschrieben:
Zunächst (Schritt a1)) werden die Ausgangsstoffe, also das Bindemittel, der Füllstoff Kaolin und das Graphit sowie gegebenenfalls weitere Additive, z.B. Gleitmittel wie Calciumstearat, oder Tenside, trocken vermischt und homogenisiert. Für weiche oder sehr weiche Härtegrade erfolgt außerdem der Zusatz von fein pulverisiertem Ruß als Ausgangsstoff.

Nach dem Homogenisieren der pulverförmigen Ausgangsstoffe in Knetern oder Mischern, erfolgt der Zusatz von Wasser, insbesondere in einer solchen Menge, dass dessen Anteil - je nach erforderlichem Härtegrad - etwa 20 - 32 Gew.-% an der Grundmasse beträgt, um ein feuchtes Granulat zu erhalten (Schritt a2)). Nach der Zugabe des Wassers wird die Mischung aus Grundmasse und Wasser nochmals homogenisiert.

Die so erhaltene, Wasser enthaltende Grundmasse wird anschließend mittels Extrusion, insbesondere in sogenannten Strangpressen oder Zylinderpressen, unter hohem Druck zu Graphitminensträngen und/oder Graphitkreidensträngen und/oder Graphitblöcken extrudiert bzw. ausgepresst und abgelängt (Schritt a3)).

Im Anschluss werden die noch flexiblen, extrudierten Graphitkreiden und/oder Graphitminen und/oder Graphitblöcke getrocknet (Schritt a4)). Die Trocknung der Graphitminen erfolgt dabei vorzugsweise in Büchsen bei Temperaturen von bis zu 130°C und unter Drehen. Zur Trocknung der Graphitkreiden oder Graphitblöcke werden diese vorzugsweise auf Blechen aufgeschichtet und bei Temperaturen von Raumtemperatur bis 40°C getrocknet.

Im Anschluss daran wird der so erhaltene Grundkörper bzw. die Rohmine, Rohkreide oder der Rohblock, in einer wasserfesten Präparationsmischung enthaltend weiße Paraffinwachse, nämlich wenigstens eine Mischung aus iso- und n-Paraffinen oder in einer wasserlöslichen Präparationsmischung enthaltend wenigstens einen wasserlöslichen Emulgator imprägniert (Schritt b)). Dies erfolgt vorzugsweise durch Einbringen des Grundkörpers bzw. der Rohmine oder Rohkreide oder des Rohblockes in eine sogenannte rechteckige Präparierbüchse. Im Falle einer wasserfesten Präparationsmischung wird diese bei 80 bis 100°C aufgeschmolzen und der Grundkörper wird über Nacht eingetaucht. Die Zeit der Imprägnierung beträgt bei Minen im Durchmesser von 3,3 mm 12 bis 24 Stunden, wobei die gesamte Wachsaufnahme je nach Minendurchmesser und Cellulose-Gehalt zwischen 10 und 25 Gew.-% liegt.

In einem abschließenden Schritt (Schritt c)) wird die überschüssige Präparationsmischung aus dem imprägnierten Grundkörper entfernt, vorzugsweise mittels einer Zentrifuge.

Nachfolgend sind fünf verschiedene Zusammensetzungen, die als Ausgangsstoffe für die Herstellung der Grundmasse eingesetzt werden, sowie zwei verschiedene Zusammensetzungen für die wasserfeste Präparationsmischung aufgeführt.

Beispiel 1: Graphitblock in den Abmessungen ca. 50 mm x 20 mm x 10 mm, Härtegrad 14B:

| | |
|---|---|
| Carboxymethylcellulose (CMC100): | 2,5 Gew.-% |
| Kaolin: | 51,5 Gew.-% |
| Graphit: | 19 Gew.-% |
| Ruß: | 26,7 Gew.-% |
| Additiv Genapol PF 80 FP¹⁾: | 0,3 Gew.-% |

Die zur Herstellung des Graphitblockes gemäß Beispiel 1 eingesetzte Präparationsmischung enthält:

| | |
|---|---|
| Stearinsäure²⁾ | 60 Gew.-% |
| iso-/n-Paraffinwachsmischung³⁾ | 15 Gew.-% |
| Triglyceride⁴⁾ | 25 Gew.-% |

Weitere Beispiele 2 bis 5, jeweils zur Herstellung einer Graphitmine mit einem Durchmesser von etwa 3 mm jedoch mit unterschiedlichen Härtegraden, sind in nachfolgender Tabelle 1 zusammengefasst (Alle Angaben sind in Gewichtsprozent):

**Tabelle 1:**

| | Beispiel 2: Härtegrad HB | Beispiel 3: Härtegrad 8B | Beispiel 4: Härtegrad 12B | Beispiel 5: Härtegrad 14B |
|---|---|---|---|---|
| Cellulosebindemittel CMC 100 | 4 | 4 | 4 | 4 |
| Kaolin | 86,0 | 65,4 | 55,1 | 49,95 |
| Graphit | 10 | 15,6 | 18,4 | 19,8 |
| Ruß | 0 | 15,0 | 22,5 | 26,25 |

Für die Beispiele 2 bis 5 wird jeweils eine wasserfeste Präparationsmischung mit folgender Zusammensetzung eingesetzt:

| | |
|---|---|
| Stearin⁵⁾: | 40 Gew.-% |
| iso-/n-Paraffinmischung³⁾: | 30 Gew.-% |
| Triglyceride⁴⁾: | 30 Gew.-% |

Nach der Herstellung der Graphitminen bzw. des Graphitblockes wurden Aufstriche auf einer Malunterlage, vorliegend Papier, erzeugt und hinsichtlich der Aufstricheigenschaften beurteilt.

Die Graphitminen erzeugen auf Papier einen matten, gleichmäßigen Aufstrich. Es erfolgte eine Messung des Glanzwertes gemäß der nachfolgenden Methode:

| | |
|---|---|
| Gerät: | Micro-TRI-gloss von BYK 60°Winkel. |
| Referenzwerte: | 95 GP höchster Glanzwert |
| | 2 GP niedrigster Glanzwert |
| Farbdichte gemessen mit: | X-Rite exact |
| Referenzwert: | 1,90 Farbdichte für optimales Schwarz |

Die Ergebnisse der Messung der Graphitminen mit einer Zusammensetzung gemäß vorstehender Beispiele 3 und 5 sowie von drei Vergleichsminen mit Härtegrad 8B sind in der nachfolgenden Tabelle 2 zusammengefasst.

**Tabelle 2:**

| | Farbdichte Black | Glanz |
|---|---|---|
| Faber-Castell matt schwarz, 8B (Beispiel 3) | 1,46 | 7 GP |
| Faber-Castell matt, 14B (Beispiel 5): | 1,63 | 8 GP |
| Faber-Castell Standardmine Castell 8B | 1,32 | 19 GP |
| Produkt eines Mitbewerbers, made in Germany, Härtegrad 8B: | 1,33 | 16 GP |
| Produkt eines Mitbewerbers, Asien, matt, 8B: | 1,30 | 23 GP |

Aufgrund der vorliegenden objektiven Ergebnisse der Messung kann gezeigt werden, dass insbesondere der eingesetzte Paraffintyp zusammen mit der eingesetzten Graphittype eine Graphitmine erzeugt, die einen deutlich reduzierten Glanzgrad (7 bzw. 8 GP) gegenüber handelsüblichen Standardminen (16 bis 23 GP) besitzt.

Ferner zeigt der erzeugte Aufstrich bei den erfindungsgemäßen Graphitminen ein kräftigeres und deckenderes Schwarz als bei den Vergleichsminen.

### Produktbezeichnungen/Hersteller:

1) Clariant AG, D-65929 Frankfurt am Main
2), 3), 4), 5) Wachs- und Ceresin Fabriken Th. C. Tromm GmbH, Feuerstraße 7 bis 17, D-50735 Köln

## Patentansprüche

1. Graphitmine oder Graphitkreide oder Graphitblock zum Zeichnen und Malen, mit einem Grundkörper aus einer Grundmasse, wobei die Grundmasse zur Herstellung des Grundkörpers wenigstens ein Bindemittel auf Cellulosebasis, Kaolin als Füllstoff und Graphit enthält, wobei der Grundkörper mit einer wasserfesten Präparationsmischung enthaltend wenigstens eine Mischung aus iso- und n-Paraffinen imprägniert ist.

2. Graphitmine oder Graphitkreide oder Graphitblock nach Anspruch 1, wobei das Bindemittel in der Grundmasse zur Herstellung des Grundkörpers mit einem Anteil zwischen 0,5 und 6 Gew.-% enthalten ist.

3. Graphitmine oder Graphitkreide oder Graphitblock nach einem der vorhergehenden Ansprüche, wobei der Füllstoff in der Grundmasse zur Herstellung des Grundkörpers mit einem Anteil zwischen 40 und 90 Gew.-% enthalten ist.

4. Graphitmine oder Graphitkreide oder Graphitblock nach einem der vorhergehenden Ansprüche, wobei Graphit in der Grundmasse zur Herstellung des Grundkörpers mit einem Anteil zwischen 4 und 30 Gew.-% enthalten ist.

5. Graphitmine oder Graphitkreide oder Graphitblock nach einem der vorhergehenden Ansprüche, wobei der Graphit eine Korngrößenverteilung x₁₀ = 0,9 µm, x₅₀ = 3,3 µm, x₉₀ = 14,6 µm und einen Kohlenstoffgehalt von 88 bis 92 Gew.-% aufweist.

6. Graphitmine oder Graphitkreide oder Graphitblock nach einem der vorhergehenden Ansprüche, wobei in der Grundmasse Ruß enthalten ist und wobei der Anteil an Ruß in der Grundmasse zur Herstellung des Grundkörpers insbesondere maximal 35 Gew.-% beträgt.

7. Graphitmine oder Graphitkreide oder Graphitblock nach einem der vorhergehenden Ansprüche, wobei als wenigstens ein Additiv ein Gleitmittel und/oder ein Tensid und/oder ein Emulgator enthalten ist und wobei der Anteil an Additiven insbesondere maximal 5 Gew.-% beträgt.

8. Graphitmine oder Graphitkreide oder Graphitblock nach einem der vorhergehenden Ansprüche, wobei die Mischung aus iso- und n-Paraffinen in einer Konzentration zwischen 10 und 50 Gew.-% in der wasserfesten Präparationsmischung enthalten ist.

9. Graphitmine oder Graphitkreide oder Graphitblock nach einem der vorhergehenden Ansprüche, wobei die wasserfeste Präparationsmischung eine Fettsäure, insbesondere Stearin oder Stearinsäure, enthält.

10. Graphitmine oder Graphitkreide oder Graphitblock nach Anspruch 9, wobei die Fettsäure in einer Konzentration zwischen 25 und 70 Gew.-% in der wasserfesten Präparationsmischung enthalten ist.

11. Graphitmine oder Graphitkreide oder Graphitblock nach einem der vorhergehenden Ansprüche, wobei die wasserfeste Präparationsmischung Triglyceride und/oder weitere wachsartige Komponenten, insbesondere Fettsäurederivate oder Polyolefinwachse oder Ethylenvinylacetatwachs, enthält.

12. Graphitmine oder Graphitkreide oder Graphitblock nach Anspruch 11, wobei die Triglyceride oder weiteren wachsartigen Komponenten in einer maximalen Konzentration von 40 Gew.-% in der wasserfesten Präparationsmischung enthalten sind.

13. Stift mit einer Graphitmine nach einem der Ansprüche 1 bis 12, insbesondere ein Stift mit einer Ummantelung aus Holz oder aus einem Holzersatzwerkstoff oder ein mechanischer Stift.

14. Verfahren zur Herstellung einer Graphitmine oder Graphitkreide oder Graphitblock, insbesondere nach einem der Ansprüche 1 bis 12, umfassend die nachfolgenden Schritte:
a) Herstellen eines Grundkörpers aus einer Grundmasse, wobei die Grundmasse wenigstens ein Bindemittel auf Cellulosebasis, Kaolin als Füllstoff und Graphit enthält, insbesondere durch
a1) Vermischen und Homogenisieren wenigstens des Bindemittels, des Füllstoffes und des Graphits zu der Grundmasse,
a2) Zugabe von Wasser zu der Grundmasse und Homogenisieren der Mischung aus Grundmasse und Wasser,
a3) Extrusion der Grundmasse zu Graphitminensträngen und/oder Graphitkreidensträngen und/oder Graphitblöcken,
a4) Trocknen der extrudierten Graphitminen und/oder Graphitkreiden und/oder Graphitblöcke,
b) Imprägnieren des Grundköpers in einer wasserfesten Präparationsmischung enthaltend wenigstens eine Mischung aus iso- und n-Paraffinen,
c) Entfernen überschüssiger Präparationsmischung.

## Claims

1. Graphite lead or graphite chalk or graphite block for drawing and painting, having a base body made of a base mass, the base mass for producing the base body containing at least one cellulose-based binder, kaolin as filler and graphite, the base body being impregnated with a waterproof preparation mixture containing at least one mixture of iso- and n-paraffins.

2. Graphite lead or graphite chalk or graphite block according to claim 1,
wherein the binder is contained in the base mass for the production of the base body in a proportion of between 0.5 and 6 wt.%.

3. Graphite lead or graphite chalk or graphite block according to one of the preceding claims, wherein the filler is contained in the base mass for the production of the base body in a proportion of between 40 and 90 wt.%.

4. Graphite lead or graphite chalk or graphite block according to one of the preceding claims, wherein graphite is contained in the base mass for the production of the base body in a proportion of between 4 and 30 wt.%.

5. Graphite lead or graphite chalk or graphite block according to any one of the preceding claims, wherein the graphite has a grain size distribution x₁₀ = 0.9 µm, x₅₀ = 3.3 µm, x₉₀ = 14.6 µm and a carbon content of 88 to 92 wt.%.

6. Graphite lead or graphite chalk or graphite block according to one of the preceding claims, wherein carbon black is contained in the base mass and wherein the proportion of carbon black in the base mass for producing the base body is in particular at most 3 wt.%.

7. Graphite lead or graphite chalk or graphite block according to one of the preceding claims, wherein a lubricant and/or a surfactant and/or an emulsifier is contained as at least one additive and wherein the proportion of additives is in particular at most 5 wt.%.

8. Graphite lead or graphite chalk or graphite block according to any one of the preceding claims, wherein the mixture of iso- and n-paraffins is present in a concentration of between 10 and 50 wt.% in the waterproof preparation mixture.

9. Graphite lead or graphite chalk or graphite block according to any one of the preceding claims, wherein the waterproof preparation mixture contains a fatty acid, in particular stearic or stearic acid.

10. Graphite lead or graphite chalk or graphite block according to claim 9, wherein the fatty acid is present in a concentration of between 25 and 70 wt.%. in the waterproof preparation mixture.

11. Graphite lead or graphite chalk or graphite block according to any one of the preceding claims, wherein the waterproof preparation mixture contains triglycerides and/or further wax-like components, in particular fatty acid derivatives or polyolefin waxes or ethylene vinyl acetate wax.

12. Graphite lead or graphite chalk or graphite block according to claim 11, wherein the triglycerides or further wax-like components are contained in a maximum concentration of 40 wt.%. in the waterproof preparation mixture.

13. Pencil with a graphite lead according to any one of claims 1 to 12, in particular a pencil with a sheathing of wood or of a wood substitute material or a mechanical pencil.

14. A method of producing a graphite lead or graphite chalk or graphite block, in particular according to any one of claims 1 to 12, comprising the following steps:
a) Production of a base body from a base mass, the base mass containing at least one cellulose-based binder, kaolin as a filler and graphite, in particular by means of
a1) Mixing and homogenising at least the binder, the filler and the graphite to the base mass,
a2) Adding water to the base mass and homogenising the mixture of base mass and water,
a3) Extrusion of the base mass into graphite lead strands and/or graphite chalk strands and/or graphite blocks,
a4) Drying of the extruded graphite leads and/or graphite chalks and/or graphite blocks,
b) Impregnation of the base body in a waterproof preparation mixture containing at least one mixture of iso- and n-paraffins,
c) Removal of excess preparation mixture.

## Revendications

1. Mine de graphite ou craie de graphite ou bloc de graphite pour dessiner et peindre, avec un corps de base constitué d'une masse de base, la masse de base pour la fabrication du corps de base contenant au moins un liant à base de cellulose, du kaolin comme charge et du graphite, le corps de base étant imprégné d'un mélange de préparation résistant à l'eau contenant au moins un mélange d'iso- et de n-paraffines.

2. Mine de graphite ou craie de graphite ou bloc de graphite selon la revendication 1, le liant étant contenu dans la masse de base pour la fabrication du corps de base dans une proportion comprise entre 0,5 et 6 % en poids.

3. Mine de graphite ou craie de graphite ou bloc de graphite selon l'une des revendications précédentes, la charge étant contenue dans la masse de base pour la fabrication du corps de base dans une proportion comprise entre 40 et 90 % en poids.

4. Mine de graphite ou craie de graphite ou bloc de graphite selon l'une des revendications précédentes, le graphite étant contenu dans la masse de base pour la fabrication du corps de base dans une proportion comprise entre 4 et 30% en poids.

5. Mine de graphite ou craie de graphite ou bloc de graphite selon l'une des revendications précédentes, le graphite étant présente une distribution granulométrique x₁₀ = 0,9 µm, x₅₀ = 3,3 µm, x₉₀ = 14,6 µm et une teneur en carbone de 88 à 92 % en poids.

6. Mine de graphite ou craie de graphite ou bloc de graphite selon l'une des revendications précédentes, du noir de carbone étant contenu dans la masse de base et la proportion de noir de carbone dans la masse de base pour la fabrication du corps de base étant notamment de 35 % en poids au maximum.

7. Mine de graphite ou craie de graphite ou bloc de graphite selon l'une des revendications précédentes, dans laquelle est contenu comme au moins un additif un lubrifiant et/ou un agent tensioactif et/ou un émulsifiant et dans laquelle la proportion d'additifs est en particulier de 5 % en poids maximum.

8. Mine de graphite ou craie de graphite ou bloc de graphite selon l'une des revendications précédentes, dans laquelle le mélange d'iso- et de n-paraffines est présent à une concentration comprise entre 10 et 50 % en poids dans le mélange de préparation résistant à l'eau.

9. Mine de graphite ou craie de graphite ou bloc de graphite selon l'une des revendications précédentes, dans laquelle le mélange de préparation résistant à l'eau contient un acide gras, en particulier de la stéarine ou de l'acide stéarique.

10. Mine de graphite ou craie de graphite ou bloc de graphite selon la revendication 9, l'acide gras étant présent à une concentration comprise entre 25 et 70 % en poids dans le mélange de préparation résistant à l'eau.

11. Mine de graphite ou craie de graphite ou bloc de graphite selon l'une des revendications précédentes, le mélange de préparation résistant à l'eau contenant des triglycérides et/ou d'autres composants cireux, en particulier des dérivés d'acides gras ou des cires de polyoléfine ou de la cire d'éthylène-acétate de vinyle.

12. Mine de graphite ou craie de graphite ou bloc de graphite selon la revendication 11, dans laquelle les triglycérides ou autres composants cireux sont contenus dans le mélange de préparation résistant à l'eau à une concentration maximale de 40 % en poids.

13. Crayon avec une mine de graphite selon l'une des revendications 1 à 12, en particulier un crayon avec un revêtement en bois ou en un matériau de substitution du bois ou un crayon mécanique.

14. Procédé de fabrication d'une mine de graphite ou d'une craie de graphite ou d'un bloc de graphite, notamment selon l'une des revendications 1 à 12, comprenant les étapes suivantes:
a) fabrication d'un corps de base à partir d'une masse de base, la masse de base contenant au moins un liant à base de cellulose, du kaolin comme charge et du graphite, en particulier par
a1) mélanger et homogénéiser au moins le liant, la charge et le graphite pour obtenir la masse de base,
a2) Ajouter de l'eau à la masse de base et homogénéiser le mélange de masse de base et d'eau,
a3) extrusion de la masse de base en boudins de mine de graphite et/ou en boudins de craie de graphite et/ou en blocs de graphite,
a4) séchage des mines de graphite et/ou des craies de graphite et/ou des blocs de graphite extrudés,
b) imprégnation du corps de base dans un mélange de préparation résistant à l'eau contenant au moins un mélange d'iso- et de n-paraffines,
c) éliminer l'excès de mélange de préparation.
